# EUROPEAN PATENT APPLICATION

(11) **EP 1 930 073 A1**
(43) Date of publication of application: **11.06.2008**
(21) Application number: 06798194.4
(22) Date of filing: 21.09.2006
(51) Int. Cl.: B01J 20/22, B65D 1/00, C08K 3/10, C08K 5/15, C08L 101/00

(54) **OXYGEN ABSORBING COMPOSITION AND CONTAINERS MADE BY USING THE SAME**

(30) Priority: 30.09.2005 JP 2005288126
(71) Applicant: Kuraray Co., Ltd., Okayama 710-8622 (JP)
(72) Inventor: YAMANAKA, Masayoshi, Tsukuba-shi,Ibaraki 305-0841 (JP); KANEHARA, Mie, Ibaraki 314-0254 (JP); HAYASHIBARA, Tatsuhiko, Kurashiki-shi, Okayama 7108622 (JP); WATANABE, Tomoyuki, Kurashiki-shi, Okayama 713-8550 (JP); IWASAKI, Hideharu, Kurashiki-shi, Okayama 7108691 (JP)
(74) Representative: Hart-Davis, Jason
(86) International application number: PCT/JP2006/318752
(87) International publication number: WO 2007/040060

(57) **Abstract**

An oxygen absorbing composition of the present invention comprises a compound with a molecular weight of less than 10000 and an oxygen absorption accelerator. The compound includes two or more ring structures that are of at least one type, each of which has an ether bond. The oxygen absorbing composition further may contain a gas barrier resin. A laminate of the present invention comprises a layer formed of an oxygen absorbing composition of the present invention.

## Description

### Technical Field

The present invention relates to an oxygen absorbing composition and articles, such as a container, made by using the same.

### Background Art

Gas barrier resins, for example an ethylene-vinyl alcohol copolymer, are materials with excellent oxygen gas barrier properties and carbon dioxide gas barrier properties and can be melt-formed. Therefore these gas barrier resins are laminated with layers of thermoplastic resins (polyolefin, polyester, etc.) with excellent moisture resistance and mechanical properties and are used suitably as multilayer plastic packaging materials. However, the gas permeability of these gas barrier resins is not zero and an unignorable amount of gas permeates the resins. In order to reduce the permeation of such gas, particularly oxygen that considerably affects the quality of content, and in order to remove oxygen that already exists inside a packaging material at the time of packaging of content, oxygen absorbents are used.

For instance, a composition containing a transition metal catalyst and an ethylenically unsaturated compound has been proposed as an improved oxygen absorbent (see JP 5(1993)-115776 A). Furthermore, resin compositions, each of which contains an ethylene-vinyl alcohol copolymer and an oxygen absorbent in combination, have been proposed (see JP 2001-106866 A, JP 2001-106920 A, and JP 2002-146217 A). Particularly, the latter can be melt-formed as in the case of the ethylene-vinyl alcohol copolymer and therefore can be used suitably for various packaging materials. Furthermore, oxygen absorbents also have been proposed, each of which contains a polymer with an ether structure used therein (see JP 2003-113311 A, JP 2003-245999A, and USP 6,746,622).

However, when oxygen absorbents and oxygen absorbing compositions as described in JP 5(1993)-115776 A, JP 2001-106866 A, JP 2001-106920 A, and JP 2002-146217 A are used as packaging materials, oxygen absorbents are decomposed as oxygen absorption proceeds and thereby an unpleasant odor may be generated. Accordingly, a further improvement has been desired for uses for which flavors are considered as important. Moreover, when oxygen absorbents and oxygen absorbing compositions as described in JP 2003-113311 A and JP 2003-245999 A are used as packaging materials, chain ether may be cleaved and thereby an unpleasant odor may be generated. Furthermore, oxygen absorbents and oxygen absorbing compositions as described in USP 6,746,622 may have a problem in that the thermal stability of compounds is poor and the processability is poor.

### Disclosure of Invention

In such a situation, an object of the present invention is to provide an oxygen absorbing composition that does not generate unpleasant odors during oxygen absorption. Furthermore, another object of the present invention is to provide an oxygen absorbing composition in which a compound that exhibits oxygen absorption ability has been dispersed in resin with a good dispersibility

In order to achieve the above-mentioned objects, the oxygen absorbing composition of the present invention comprises a compound with a molecular weight of less than 10000 and an oxygen absorption accelerator. The compound contains two or more ring structures that are of at least one type, each of which has an ether bond.

In this specification, the term "ring structure" denotes the structure of the skeleton that forms a ring and does not embrace substituents bonded to the ring.

The oxygen absorbing composition of the present invention further may comprise a gas barrier resin.

A laminate of the present invention comprises a layer formed of the aforementioned oxygen absorbing composition of the present invention. Furthermore, a container of the present invention comprises a portion formed of the oxygen absorbing composition of the present invention.

The oxygen absorbing composition of the present invention has excellent oxygen absorption properties (oxygen scavenging properties) and does not generate unpleasant odors during oxygen absorption. Accordingly, the composition of the present invention is useful as a material to be used for containers for keeping articles such as foodstuffs and cosmetics that tend to be deteriorated by oxygen gas and in which flavors are considered as important. Furthermore, it also is useful as a deoxidizer from the viewpoints of its excellent oxygen absorption ability and easy handling.

### Brief Description of Drawings

FIG. 1 shows diagrams illustrating examples of the ring structure of a compound (A) used in the present invention.
FIG. 2 shows diagrams illustrating examples of the compound (A) used in the present invention.
FIG. 3 shows a diagram illustrating another example of the compound (A) used in the present invention.
FIG. 4 shows diagrams illustrating further examples of the compound (A) used in the present invention.
FIG. 5 shows diagrams illustrating still other examples of the compound (A) used in the present invention.
FIG. 6 shows a diagram illustrating yet another example of the compound (A) used in the present invention.
FIG. 7 shows diagrams illustrating further examples of the compound (A) used in the present invention.
FIG. 8 shows diagrams illustrating still other examples of the compound (A) used in the present invention.
FIG. 9 is a graph showing an example of the results obtained by measuring the oxygen absorption abilities of the oxygen absorbing compositions according to the present invention and those of comparative examples.
FIG. 10 is a graph showing another example of the results obtained by measuring the oxygen absorption abilities of the oxygen absorbing compositions according to the present invention and those of comparative examples.
FIG. 11 is a graph showing still another example of the results obtained by measuring the oxygen absorption abilities of the oxygen absorbing compositions according to the present invention and those of comparative examples.

### Description of the Preferred Embodiments

Embodiments of the present invention are described below. In the following description, specific materials are indicated as examples of the materials that exhibit specific functions. However, the present invention is not limited thereto. Furthermore, the materials described as examples may be used individually or two or more of them may be used in combination unless otherwise described.

The oxygen absorbing composition of the present invention includes a compound with a molecular weight of less than 10000 (hereinafter also may be referred to as a "compound (A)") and an oxygen absorption accelerator (hereinafter also may be referred to as an "oxygen absorption accelerator (B)"). The compound (A) contains two or more ring structures that are of at least one type, each of which has an ether bond. Hereinafter, the ring structure also may be referred to as "ring structure (L)". Since the compound (A) contains an ether bond inside the molecule, it can react with oxygen efficiently and can provide the oxygen absorption ability (oxygen scavenging ability). The amount of the ether bond contained in the compound (A) is preferably 0.001 eq/g or more, more preferably 0.005 eq/g or more, and further preferably 0.01 eq/g or more. In order to obtain a composition with a high oxygen absorption ability, it is preferable that the content of the ether bond be 0.001 eq/g or more. The oxygen absorption accelerator (B) is a material that facilitates the oxidation of the compound (A).

The compound (A) contained in the composition of the present invention may be one type of compound or may contain a plurality of compounds.

In the present invention, an ether bond that reacts when oxygen gas is absorbed exists in a ring structure. Therefore a decomposition product with a low molecular weight can be prevented from being produced even when the carbons forming the ether bond react with oxygen and thereby the ether bond is cleaved. Furthermore, the ring structure having the ether bond has a high reaction rate with oxygen gas. Particularly, when it is combined with a cobalt salt, it has a high reaction rate with oxygen gas. A typical example of the compound (A) does not contain ether bonds in any moieties other than the ring structure.

In the compound (A), the number of the oxygen atoms of the ether bond included in the moieties other than the ring structure may be, for example, 0.5 times or less, 0.3 times or less, or 0.1 times or less the number of the oxygen atoms of the ether bond included in the ring structure.

On the other hand, in the case of using a linear polyether or a branched polyether, a decomposition product with a low molecular weight may be produced when the ether bond reacts with oxygen and thereby is cleaved. Since the decomposition product with a low molecular weight may generate an unpleasant odor, a linear or branched polyether is not suitable for specific uses in some cases. Moreover, when a linear polyether or a branched polyether is used, a sufficiently high oxygen absorption rate cannot be obtained in some cases. Furthermore, in the case of using a linear polyether or a branched polyether, a large amount of metal catalyst may be required.

When the compound (A) contains an ester bond, decomposition may occur in the ester bond moiety In the case where the compound (A) contains an ester bond, it may gelate when being mixed with a polyvinyl alcohol resin (for instance, an ethylene-vinyl alcohol copolymer). If such gelation needs to be prevented, it is preferable that the compound (A) do not contain an ester bond. An example of such a compound (A) is a compound containing no ester bond, with no moieties other than the ring structure containing an ether bond.

Two or more ring structures (L) contained in the compound (A) may be identical to or different from each other. The ring structures (L) may be bonded directly to each other or may be bonded to each other with an organic chain. Examples of the organic chain include an alkylene group with a carbon number of 1 to 10 and a hydrocarbon chain containing one or more ether bond. These organic chains may have a carbon-carbon double bond, a nitrogen atom, or a substituent in a moiety thereof. Examples of the substituents contained in the organic chains include the substituents to be described later as substituents that bond to the ring structures (L). The ring structures (L) may be bonded to each other by sharing one or two carbon atoms of the ring structures. For instance, a plurality of ring structures (L) may form a condensed ring.

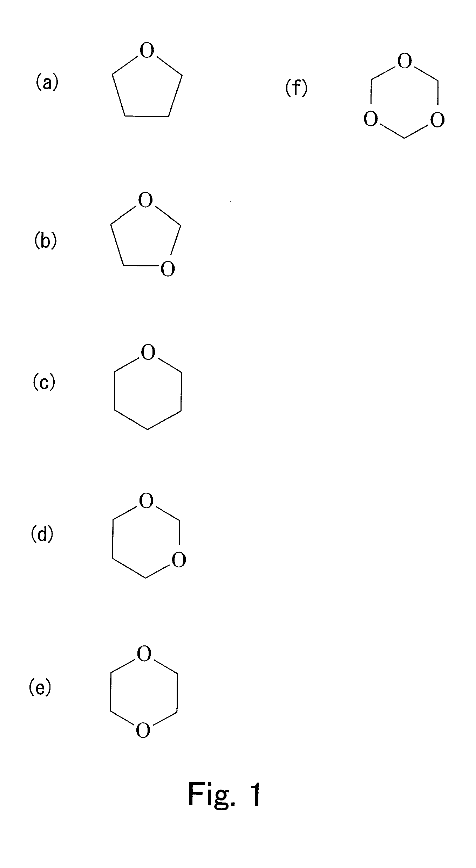

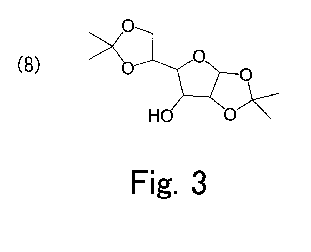

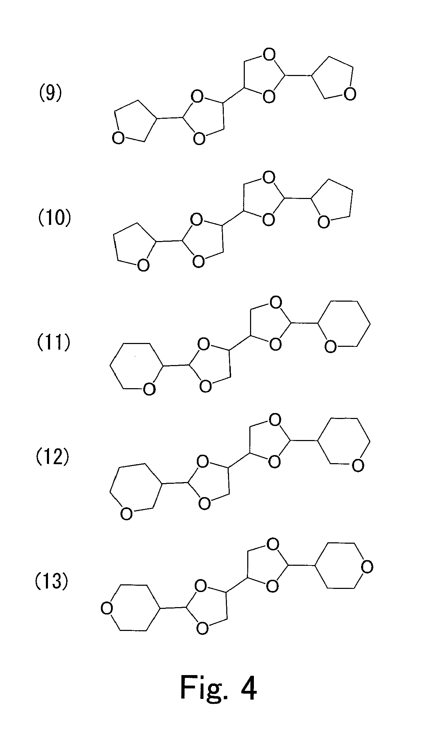

The ring structures (L) each may be composed of an oxygen atom and a saturated hydrocarbon chain bonded to the oxygen atom. Examples of such ring structures (L) include tetrahydrofuran (also known as oxolane) shown in FIG. 1(a), 1,3-dioxolane (also known as 1,3-dioxacyclopentane) shown in FIG. 1(b), tetrahydropyran (also known as oxane) shown in FIG.1(c), 1,3-dioxane shown in FIG. 1(d), 1,4-dioxane shown in FIG. 1(e), and 1,3,5-trioxane shown in FIG. 1(f). The substituents to be described later may be bonded to those ring structures (L).

At least one type of the ring structures (L) may contain a nitrogen atom. Such a ring structure (L) is composed of, for example, one or two oxygen atoms, one or two nitrogen atoms, and three or four carbon atoms. Specific examples thereof include structures of morpholine and derivatives thereof (for instance, N-methylmorpholine).

The ring structures (L) each may be one of four- to seven-membered rings (a four-membered ring, a five-membered ring, a six-membered ring, and a seven-membered ring). When the compound (A) includes ring structures (L) of a plurality of types, the numbers of the atoms forming each ring structure (L) may be identical to or different from one another. When the ring structure (L) contained in the compound (A) is a five-membered ring and/or a six-membered ring, there are advantages that it is easy to produce at low cost and has excellent stability in use.

At least one type of substituent with a carbon number of 1 to 11 may be bonded to at least one type of the ring structures (L). In this case, it is preferable that no substituent be bonded to at least one of the carbons that form an ether bond (C-O-C) from the viewpoint of obtaining a high oxygen absorption ability. Therefore, it is preferable that the substituent be bonded to a carbon atom other than the carbon atoms that form the ether bond (C-O-C) or be bonded to a nitrogen atom. Examples of the substituent include an alkyl group that may have a substituent, an aryl group that may have a substituent, an alkyl aryl group that may have a substituent, and an alkyl ether group that may have a substituent.

The number of carbon atoms of the alkyl group is preferably in the range of 1 to 5. The number of carbon atoms of the aryl group is preferably in the range of 6 to 10. The number of carbon atoms of the alkyl aryl group is preferably in the range of 7 to 11. Examples of the alkyl group include methyl group, ethyl group, propyl group, and butyl group. Examples of the aryl group include phenyl group. Examples of the alkyl aryl group include tolyl group. Examples of the substituents that the alkyl group and the aryl group have include an alkyl group, an aryl group, an acetal group, a ketal group, an alkoxycarbonyl group, and an ether group. When the substituent has at least one group selected from the group consisting of an acetal group, a ketal group, an alkoxycarbonyl group, and an ether group, the affinity to the resin to be dispersed is improved and thereby the dispersibility of the compound (A) in the resin is improved. Among those groups, the acetal group, the ketal group, and the ether group have an advantage in that the thermal stability is high.

The molecular weight of the compound (A) is less than 10000. If the molecular weight of the compound (A) is 10000 or more, the compound (A) may have a deteriorated dispersibility and thus deteriorated gas barrier properties and oxygen absorption ability when used together with the gas barrier resin (C) by being mixed therewith. The molecular weight of the compound (A) may be 200 to 3000, for example 200 to 1000, 200 to 400, or 200 to 300. When the compound (A) has a molecular weight of less than 200, the low molecular weight material may tend to bleed out. When the compound (A) has a molecular weight of 3000 or less, an oxygen absorbing composition tends to be easy to produce since a high purity compound tends to be obtained. Furthermore, when the compound (A) has a molecular weight of 3000 or less, the dispersibility of the compound (A) with respect to the resin is improved particularly.

The compound (A) may include at least one structure selected from an acetal structure and a ketal structure. The use of compounds (A) including those structures makes it possible to obtain compositions with a particularly high oxygen absorption ability. The ether bond contained in any ring structure (L) of the compound (A) may be an ether bond alone that is a moiety of the acetal structure or ketal structure.

Preferably, the oxygen atom and the carbon atom that are contained in the compound (A) satisfy 0.05 < [the number of oxygen atoms] / [the number of carbon atoms] < 1.0. When the above-mentioned ratio is lower than 0.05, the dispersibility of the compound (A) may be deteriorated in a mixture of the gas barrier resin (C) and the compound (A) and thereby the gas barrier properties and the oxygen absorption ability may be deteriorated. The ratio of [the number of oxygen atoms] / [the number of carbon atoms] may be, for example, 0.07 to 0.8 or 0.1 to 0.5.

The compound (A) may include four or more ring structures (L). For instance, the compound (A) may include four, five, six, seven, or eight ring structures (L).

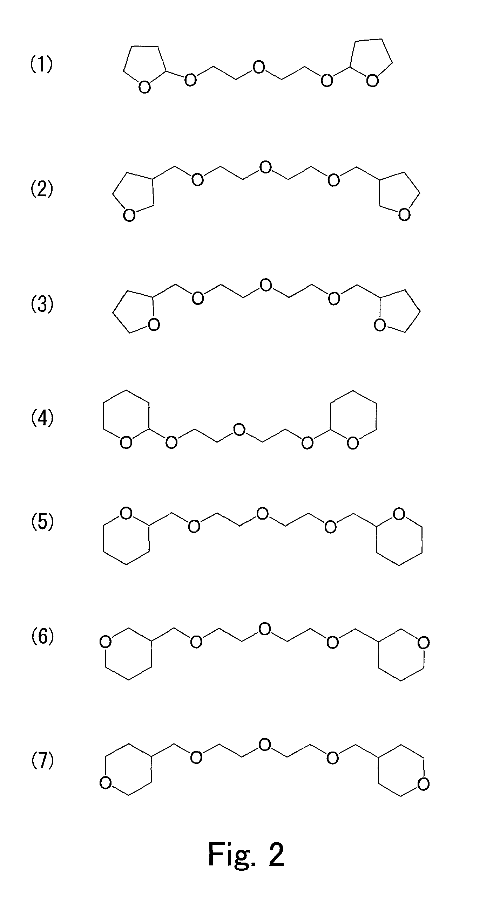

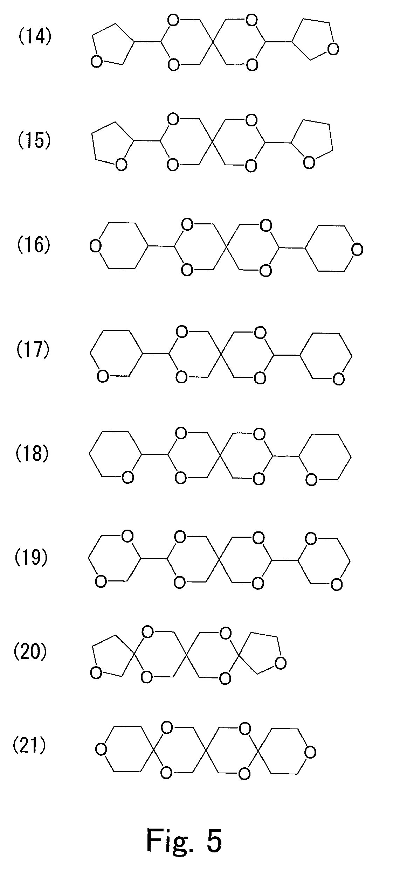

FIG. 2 shows examples of the compound (A) including two ring structures (L). The compounds (1) to (7) shown in FIG. 2 each have a structure in which an oxolane or an oxane that exists at each end is bonded with chain polyether. The above-mentioned organic chains, for instance, a hydrocarbon group may be used instead of the chain polyether.

FIG. 3 shows an example of the compound (A) including three ring structures (L). In the compound (8) shown in FIG. 3, two of the three ring structures (L) are bonded to each other while sharing two atoms.

FIG. 4 shows examples of the compound (A) including four ring structures (L). In the compounds (9) to (13) shown in FIG. 4, the four ring structures (L) are bonded together directly. FIG. 5 shows other examples of the compound (A) including four ring structures (L). In the compounds (14) to (21) shown in FIG. 5, two of the four ring structures (L) are bonded to each other while sharing one atom.

As shown in FIGs. 4 and 5, an example of the compound (A) includes four ring structures (L), each of which is at least one selected from oxolane, dioxolane, oxane, 1,3-dioxane, and 1,4-dioxane. The ring structures (L) may be bonded to one another directly, may be bonded to one another so as to share one or two carbons, or may be bonded to one another through an organic chain.

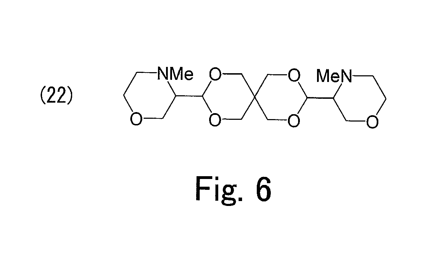

FIG. 6 shows another example of the compound (A) including four ring structures (L). The compound (22) shown in FIG. 6 includes a ring structure of morpholine (specifically, N-methylmorpholine).

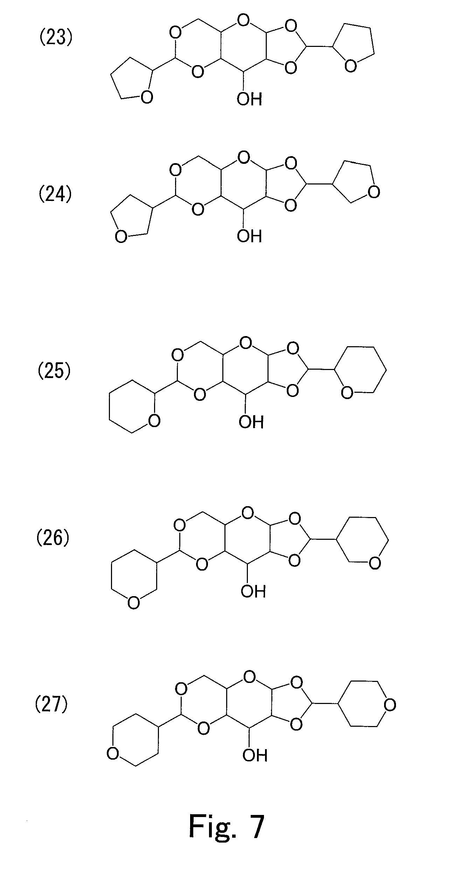

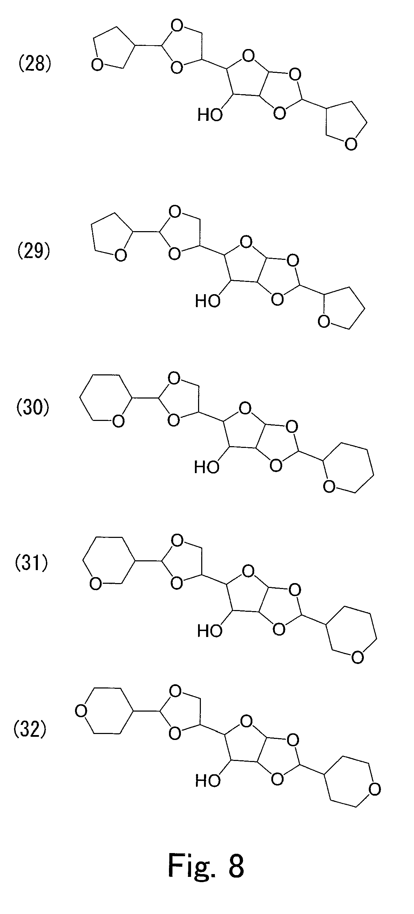

FIG. 7 shows examples of the compound (A) including five ring structures (L). In the compounds (23) to (27) shown in FIG. 7, three of the five ring structures (L) are bonded to one another while sharing two atoms. FIG. 8 shows other examples of the compound (A) including five ring structures (L). In the compounds (28) to (32) shown in FIG. 8, two of the five ring structures (L) are bonded to each other while sharing two carbon atoms.

As shown in FIGs. 4 to 8, examples of the compound (A) include four or five ring structures (L), each of which is at least one selected from oxolane, dioxolane, oxane, 1,3-dioxane, and 1,4-dioxane. The ring structures (L) may be bonded to one another directly, may be bonded to one another so as to share one or two carbons, or may be bonded to one another through an organic chain.

In the compounds shown in FIGs. 2 to 8, the ring structures (L) are selected from ring structures of oxolane, dioxolane, oxane, 1,3-dioxane, 1,4-dioxane, and morpholine. Moieties thereof can be substituted with each other.

In the compounds shown in FIGs. 3 to 8, the ring structures (L) may be bonded to one another with the organic chain described with respect to the compounds shown in FIG. 2.

FIGs. 2 to 8 show the cases where both the two ring structures (L) located at both ends are bonded to the main chain or other ring structures (L) at identical sites thereof. However, they may be bonded to the main chain or other ring structures (L) at different sites from each other.

The compound (A) to be used may be commercially available one or may be produced by a known method. For instance, in the case where the compound (A) is one containing an acetal group, it can be produced easily by dissolving 3-formyltetrahydrofuran in toluene, adding alcohols such as pentaerythritol and protonic acid (catalyst) such as sulfuric acid thereto, and acetalizing it while removing produced water according to a conventional method.

In the aforementioned oxygen absorbing composition of the present invention, the oxygen absorption accelerator (B) may be at least one selected from a transition metal salt, a radical generator, and a photocatalyst. Hereinafter, the transition metal salt, radical generator, and photocatalyst that are used as oxygen absorption accelerators may be referred to as a transition metal salt (B-1), a radical generator (B-2), and a photocatalyst (B-3), respectively. Generally, one of the transition metal salt (B-1), the radical generator (B-2), and the photocatalyst (B-3) is used for the oxygen absorption accelerator (B).

In the aforementioned oxygen absorbing composition of the present invention, the oxygen absorption accelerator (B) may be the transition metal salt (B-1) and may be at least one transition metal salt selected from the group consisting of, for example, iron salt, nickel salt, copper salt, manganese salt, and cobalt salt. Examples of the transition metal salt (B-1) include salts of metals such as iron, nickel, copper, manganese, cobalt, rhodium, titanium, chromium, vanadium, and ruthenium. However, salts of other transition metals also may be used. The use of cobalt salt allows a composition with a particularly high oxygen absorption ability to be obtained.

Examples of the counter ion (anion) contained in the transition metal salt (B-1) include an anion derived from organic acid and anion derived from chloride. Examples of the organic acid include acetic acid, stearic acid, acetylacetone, dimethyldithiocarbamic acid, palmitic acid, 2-ethylhexanoic acid, neodecanoic acid, linoleic acid, tallic acid, oleic acid, resin acid, capric acid, and naphthenic acid. Examples of particularly preferred salts include cobalt 2-ethylhexanoate, cobalt neodecanoate, and cobalt stearate. The transition metal salt (B-1) may be an ionomer.

Examples of the radical generator (B-2) include N-hydroxysuccinimide, N-hydroxymaleimide, N,N'-dihydroxycyclohexanetetracarboxylic acid diimide, N-hydroxyphthalimide, N-hydroxytetrachlorophthalimide, N-hydroxytetrabromophthalimide, N-hydroxyhexahydrophthalimide, 3-sulfonyl-N-hydroxyphthalimide, 3-methoxycarbonyl-N-hydroxyphthalimide, 3-methyl-N-hydroxyphthalimide, 3-hydroxy-N-hydroxyphthalimide, 4-nitro-N-hydroxyphthalimide, 4-chloro-N-hydroxyphthalimide, 4-methoxy-N-hydroxyphthalimide, 4-dimethylamino-N-hydroxyphthalimide, 4-carboxy-N-hydroxyhexahydrophthalimide, 4-methyl-N-hydroxyhexahydrophthalimide, N-hydroxy HET acid imide, N-hydroxy himic acid imide, N-hydroxytrimellitimide, and N,N-dihydroxy pyromellitic acid diimide. Among them, N-hydroxysuccinimide, N-hydroxymaleimide, N-hydroxyhexahydrophthalimide, N,N'-dihydroxycyclohexanetetracarboxylic acid diimide, N-hydroxyphthalimide, N-hydroxytetrabromophthalimide, and N-hydroxytetrachlorophthalimide are particularly preferred.

Examples of the photocatalyst (B-3) include titanium dioxide, tungsten oxide, zinc oxide, cerium oxide, strontium titanate, and potassium niobate. Generally, these are used in the form of powder. Among them, titanium dioxide is preferred since it has a high photocatalytic function, has been permitted to be used as a food additive, and is safe and inexpensive. The titanium dioxide is preferably of an anatase type. Preferably, 30 wt% or more (more preferably 50 wt% or more) of the titanium dioxide powder is anatase type titanium dioxide. The use of the anatase type titanium dioxide makes it possible to obtain high photocatalytic activity.

In the oxygen absorbing composition of the present invention, the oxygen absorption accelerator (B) has an effect of accelerating the oxidation reaction of the compound (A) to improve the oxygen absorption ability. The oxygen absorption accelerator (B) promotes the reaction between the compound (A) and, for instance, oxygen present inside a packaging material in which a resin composition of the present invention is used as well as oxygen that tries to penetrate the packaging material. As a result, the oxygen barrier properties and oxygen absorption ability of the packaging material are improved.

In the oxygen absorbing composition of the present invention, when the transition metal salt (B-1) is used as the oxygen absorption accelerator (B), it is preferable that the content of the transition metal salt (B-1) be in the range of 1 to 50000 ppm (which is indicated by a weight ratio, this also applies below) in terms of a metallic element based on the compound (A). The content of the transition metal salt (B-1) based on the compound (A) is more preferably in the range of 5 to 10000 ppm and further preferably in the range of 10 to 5000 ppm. When the aforementioned content of the transition metal salt (B-1) is less than 1 ppm, the effect obtained by adding it may be insufficient. On the other hand, when the content of the transition metal salt (B-1) exceeds 50000 ppm, the thermal stability of the resin composition may be deteriorated, which may cause considerable generation of cracked gas or gels and aggregates.

When the radical generator (B-2) or the photocatalyst (B-3) is used as the oxygen absorption accelerator, the amount of the oxygen absorption accelerator may be in the range of 0.1 part by weight to 100 parts by weight with respect to 100 parts by weight of the organic compound (A). The amount of the radical generator (B-2) may be in the range of 0.1 part by weight to 10 parts by weight with respect to 100 parts by weight of the organic compound (A).

### <Resin composition>

The oxygen absorbing composition of the present invention further may contain a gas barrier resin (in this specification, also referred to as a "gas barrier resin (C)"). The resin composition of the present invention containing the gas barrier resin (C) has high gas barrier properties and can be formed into various forms. The resin contained in the oxygen absorbing composition of the present invention may be a resin other than the gas barrier resin (C), or the oxygen absorbing composition may contain the gas barrier resin (C) and a resin other than the gas barrier resin(C).

Preferably, the oxygen transmission rate at 20°C and 65% RH of the gas barrier resin (C) is 500 ml·20 µm/(m²·day·atm) or lower. This denotes that when it is measured under the environment having a temperature of 20°C and a relative humidity of 65%, the volume of oxygen that permeates a 20-µm thick film with an area of 1 m² per day, with a differential pressure of oxygen being 1 atmosphere, is 500 ml or less. When a resin with an oxygen transmission rate exceeding 500 ml·20 µm/(m²·day·atm) is used, there is a risk that the resultant resin composition may have insufficient gas barrier properties. The oxygen transmission rate of the gas barrier resin (C) is more preferably 100 ml·20 µm/(m²·day·atm) or lower, further preferably 20 ml·20 µm/(m²·day·atm) or lower, and most preferably 5 ml·20 µm/(m²·day·atm) or lower. When such a gas barrier resin (C) and a compound (A) are mixed together, an oxygen trapping effect is exhibited in addition to the gas barrier effect. As a result, a resin composition with very high gas barrier properties can be obtained.

The aforementioned gas barrier resin (C) to be used can be at least one resin selected from the group consisting of, for example, polyvinyl alcohol resin, polyamide resin, polyvinyl chloride resin, and polyacrylonitrile resin.

The polyvinyl alcohol resin to be used as the gas barrier resin (C) can be obtained by saponifying a homopolymer of vinyl ester or a copolymer of vinyl ester and another monomer (particularly, a copolymer of vinyl ester and ethylene) using, for example, an alkali catalyst. A typical vinyl ester is vinyl acetate but other fatty acid vinyl esters (vinyl propionate, vinyl pivalate, etc.) also can be used.

The saponification degree of the vinyl ester component of the polyvinyl alcohol resin is preferably 90% or more, more preferably 95% or more, and further preferably 96% or more. When the saponification degree is lower than 90 mol%, the gas barrier properties may be deteriorated under high humidity. When the polyvinyl alcohol resin is an ethylene-vinyl alcohol copolymer (hereinafter also referred to as "EVOH"), the thermal stability is insufficient and thereby gels and aggregates tend to be generated to be contained in the formed product.

When the polyvinyl alcohol resin is composed of a mixture of two or more polyvinyl alcohol resins whose saponification degrees are different from each other, the average value of the saponification degrees calculated from the mixing weight ratio is taken as the saponification degree of the mixture.

Among the polyvinyl alcohol resins as described above, EVOH is suitable in that it can be melt-formed and has good gas barrier properties under high humidity.

The ratio of ethylene units to all the constitutional units of EVOH is preferably in the range of 5 to 60 mol%. When the ratio of ethylene units is lower than 5 mol%, the gas barrier properties may be deteriorated under high humidity and the melt formability may be degraded. The ratio of ethylene units is preferably 10 mol% or more, more preferably 15 mol% or more, and most preferably 20 mol% or more. On the other hand, when the ratio of ethylene units exceeds 60 mol%, sufficient gas barrier properties are not obtained in some cases. The ratio of ethylene units is preferably 55 mol% or lower and more preferably 50 mol% or lower.

In EVOH that is used suitably, the ratio of ethylene units to all the constitutional units is 5 to 60 mol% and the saponification degree is 90% or more. With respect to the multilayer container containing a resin composition of the present invention, when one with excellent impact separation resistance is desired, it is preferable that EVOH be used in which the ratio of ethylene units is 25 mol% to 55 mol% and the saponification degree is 90% or higher but lower than 99%.

When EVOH is composed of a mixture of at least two EVOHs having different ratios of ethylene units from each other, the average value calculated from the mixing weight ratio thereof is taken as the ratio of ethylene units of the mixture. In this case, it is preferable that the difference in ratio of ethylene units between EVOHs whose ratios of ethylene units have the greatest difference be 30 mol% or less and the difference in saponification degree therebetween be 10% or less. When these conditions are not satisfied, the transparency of the resin composition layer may be impaired. The difference in ratio of ethylene units is more preferably 20 mol% or less and further preferably 15 mol% or less. The difference in saponification degree is more preferably 7% or less and further preferably 5% or less. In the multilayer container containing a resin composition of the present invention, when one having impact separation resistance and gas barrier properties that are balanced at a higher level is desired, it is preferable that EVOH (c1) and EVOH (c2) be used that have been mixed together at a mixing weight ratio c1/c2 of 5/95 to 95/5, where EVOH (c1) has a ratio of ethylene units of 25 mol% to 55 mol% and a saponification degree of 90% or higher but lower than 99%, and EVOH(c2) has a ratio of ethylene units of 25 mol% to 55 mol% and a saponification degree of 99% or more.

The ratio of ethylene units and the saponification degree of EVOH can be determined by a nuclear magnetic resonance (NMR) method.

EVOH may contain, as a copolymerization component, a small amount of monomer other than ethylene and vinyl alcohol, as long as the effects of the present invention are obtained. Examples of such a monomer to be used may include alpha-olefins such as propylene, 1-butene, isobutene, 4-methyl-1-pentene, 1-hexene, and 1-octene. Furthermore, unsaturated carboxylic acids such as itaconic acid, methacrylic acid, acrylic acid, or maleic anhydride, salts thereof, partial esters thereof, total esters thereof, nitriles thereof, amides thereof, or anhydrides thereof may be used. Moreover, vinylsilane compounds such as vinyltrimethoxysilane, vinyltriethoxysilane, vinyltri(beta-methoxy-ethoxy)silane, or gamma-methacryloxypropyltrimethoxysilane may be used. Unsaturated sulfonic acids or salts thereof, alkylthiols, or vinylpyrrolidones also may be used.

EVOH may contain 0.0002 to 0.2 mol% of vinylsilane compound as a copolymerization component. In this case, when a composition of the present invention containing the EVOH is subjected to coextrusion or coinjection molding together with a resin (for instance, thermoplastic polyester) to be a base material and thereby a multilayer structure is obtained, the consistency in melt viscosity between the composition and the base material resin is improved and thereby a homogeneous molded article can be produced. A vinylsilane compound to be used suitably is vinyltrimethoxysilane or vinyltriethoxysilane. Hereinafter, thermoplastic polyester also may be abbreviated as "PES".

Similarly, when a boron compound has been added to EVOH, the EVOH has an improved melt viscosity and thereby a homogeneous article molded by coextrusion or coinjection can be obtained. Examples of the boron compound include boric acids, boric acid ester, borate, and boron hydrides. Specifically, examples of the boric acids include orthoboric acid, metaboric acid, and tetraboric acid. Examples of the boric acid ester include triethyl borate and trimethyl borate. Examples of the borate include alkali metal salt, alkaline earth metal salt, and borax of the above-mentioned various boric acids. Among these compounds, orthoboric acid is preferred.

When a boron compound is added, the content thereof is preferably 20 to 2000 ppm and more preferably 50 to 1000 ppm in terms of a boron element. This range makes it possible to obtain EVOH in which the torque fluctuations that occur when it is heated and melted are reduced. When the content is less than 20 ppm, a sufficient effect of addition of the boron compound is not obtained in some cases. On the other hand, when the content exceeds 2000 ppm, it tends to gelate and thereby the formability may be deteriorated.

In order to improve the compatibility and adhesiveness between layers, alkali metal salt may be added to EVOH, suitably in an amount of 5 to 5000 ppm in terms of alkali metal element. The amount of alkali metal salt to be added is more preferably 20 to 1000 ppm and further preferably 30 to 500 ppm in terms of alkali metal element. Examples of the alkali metal include lithium, sodium, and potassium, and examples of the alkali metal salt include aliphatic carboxylate, aromatic carboxylate, phosphate, and metal complex of alkali metal. Examples thereof include sodium acetate, potassium acetate, sodium phosphate, lithium phosphate, sodium stearate, potassium stearate, and sodium salt of ethylenediaminetetraacetate. Among them, sodium acetate, potassium acetate, and sodium phosphate are preferable.

A phosphate compound may be added to EVOH, preferably at a ratio of 20 to 500 ppm, more preferably 30 to 300 ppm, and most preferably 50 to 200 ppm in terms of phosphoric ion. When a phosphate compound is mixed within the aforementioned range, the thermal stability of EVOH can be improved. Particularly, production of gelled aggregates and coloration can be prevented in melt-formation to be carried out over a long period of time.

The type of the phosphorus compound to be added to EVOH is not particularly limited and various acids such as phosphoric acid and phosphorous acid as well as salts thereof can be used. The phosphate may be in any one of the forms of primary phosphate, secondary phosphate, and tertiary phosphate. The cationic species of the phosphate also is not particularly limited but is preferably an alkali metal or alkaline earth metal. Particularly, it is preferable that a phosphorus compound be added in the form of sodium dihydrogen phosphate, potassium dihydrogen phosphate, disodium hydrogen phosphate, or dipotassium hydrogen phosphate.

The melt flow rate (MFR) (at 210°C under a load of 2160 g according to JIS K7210) of EVOH is preferably 0.1 to 100 g/10 min, more preferably 0.5 to 50 g/10 min, and further preferably 1 to 30 g/10 min.

The polyamide resin that can be used for the gas barrier resin (C) is not particularly limited. Examples of the polyamide resin include aliphatic polyamide homopolymers such as polycaproamide (Nylon-6), polyundecaneamide (Nylon-11), polylaurolactam (Nylon-12), polyhexamethylene adipamide (Nylon-6,6), and polyhexamethylene sebacamide (Nylon-6,10); aliphatic polyamide copolymers such as a caprolactam/laurolactam copolymer (Nylon-6/12), a caprolactam/aminoundecanoic acid copolymer (Nylon-6/11), a caprolactam/ω-aminononanoic acid copolymer (Nylon-6/9), a caprolactam/hexamethylene adipamide copolymer (Nylon-6/6,6), and a caprolactam/hexamethylene adipamide/hexamethylene sebacamide copolymer (Nylon-6/6,6/6,10); aromatic polyamides such as polymetaxylylene adipamide (MX-nylon), and a hexamethylene terephthalamide/hexamethylene isophthalamide copolymer (Nylon-6T/6I). These polyamide resins each may be used individually or a mixture of two or more of them may be used. Among those polyamide resins, polycaproamide (Nylon-6) and polyhexamethylene adipamide (Nylon-6,6) are suitable from the viewpoint of gas barrier properties.

Examples of the polyvinyl chloride resin include a homopolymer of vinyl chloride or vinylidene chloride as well as a copolymer thereof with vinyl acetate, a maleic acid derivative, or higher alkyl vinyl ether.

Examples of the polyacrylonitrile resin include a homopolymer of acrylonitrile as well as a copolymer thereof with acrylic ester.

One of the above-mentioned resins or a mixture of two or more of them may be used as the gas barrier resin (C). Among the above-mentioned resins, polyvinyl alcohol resin is preferable. For instance, an ethylene-vinyl alcohol copolymer in which the ratio of ethylene units to all the constitutional units is 5 to 60 mol% and the saponification degree is 90% or more is preferred as the gas barrier resin (C).

The oxygen absorbing composition of the present invention may contain the compound (A) and the gas barrier resin (C) in such a manner that the value of [weight of compound (A)] / ([weight of compound (A)] + [weight of gas barrier resin (C)]) is in the range of 0.001 to 0.3. When the above-mentioned value is larger than 0.3, the barrier properties of the resin composition with respect to gas (for instance, oxygen gas or carbon dioxide gas) may be deteriorated. On the other hand, when the above-mentioned value is smaller than 0.001, the ratio of the compound (A) becomes lower and thereby the oxygen absorption ability may be reduced. The above-mentioned value is preferably in the range of 0.005 to 0.25, more preferably in the range of 0.01 to 0.2, and further preferably in the range of 0.03 to 0.15.

The gas barrier resin (C) or the composition of the present invention may contain a heat stabilizer, an ultraviolet absorber, an antioxidant, a colorant, a filler, or other resins (polyamide, polyolefin, etc.), as long as the effects of the present invention can be obtained.

As described above, when the composition of the present invention contains the compound (A) and the gas barrier resin (C), it is preferable that the miscibilities thereof be taken into consideration. The miscibilities of the both may affect, for example, the transparency, purity, effectiveness as an oxygen absorbent, barrier properties, mechanical properties, and texture of the product. In order to improve the miscibility of the both, the resin composition of the present invention further may contain a compatibilizer (hereinafter also may be referred to as a "compatibilizer (D)"). However, the resin composition of the present invention does not need to contain a compatibilizer.

The compatibilizer (D) is a compound that improves the compatibility between the compound (A) and the gas barrier resin (C) and stabilizes the form of the resultant resin composition. The type of the compatibilizer (D) is not particularly limited and it can be selected suitably according to the combination of the compound (A) and the gas barrier resin (C).

When the gas barrier resin (C) is a high polarity resin like a polyvinyl alcohol resin, the compatibilizer (D) is preferably an ethylene-vinyl alcohol copolymer or a hydrocarbon polymer that contains a polar group. For instance, in the case of a hydrocarbon polymer containing a polar group, the hydrocarbon moiety to serve as a base of the polymer allows good affinity to be obtained between the compatibilizer (D) and the compound (A). Furthermore, the polar group contained in the polymer allows good affinity to be obtained between the compatibilizer (D) and the gas barrier resin (C).

For example, a compatibilizer disclosed in JP 2002-146217 A may be used as the compatibilizer (D).

When the oxygen absorbing composition of the present invention contains the gas barrier resin (C) and the compatibilizer (D), the ratios of the gas barrier resin (C), the compound (A), and the compatibilizer (D) to the sum total in weight thereof may be 70 to 98.9 wt%, 29.9 to 1 wt%, and 29 to 0.1 wt%, respectively. When the ratio of the gas barrier resin (C) to the sum total in weight is lower than 70 wt%, the barrier properties of the resin composition with respect to gas (for instance, oxygen gas or carbon dioxide gas) may be deteriorated. On the other hand, when the ratio exceeds 98.9 wt%, since the ratios of the compound (A) and the compatibilizer (D) are reduced, the oxygen absorption ability may be reduced and the form stability of the whole resin composition may be impaired. The ratio of the gas barrier resin (C) is more preferably 80 to 97.5 wt% and further preferably 85 to 96 wt%. The ratio of the compound (A) is more preferably 19.5 to 2 wt% and further preferably 14 to 3 wt%. The ratio of the compatibilizer (D) is more preferably 18 to 0.5 wt% and further preferably 12 to 1 wt%.

When the oxygen absorbing composition of the present invention contains the gas barrier resin (C) and the compatibilizer (D), the content of transition metal salt (B·1) is preferably in the range of 1 to 50000 ppm in terms of metal element based on the sum total in weight of the compound (A), the gas barrier resin (C), and the compatibilizer (D). The content of transition metal salt (B-1) is preferably in the range of 5 to 10000 ppm and more preferably 10 to 5000 ppm. When the content of transition metal salt (B-1) is less than 1 ppm, the effect of addition thereof may be insufficient. On the other hand, when the content of transition metal salt (B-1) exceeds 50000 ppm, the thermal stability of the resin composition is deteriorated and thereby cracked gas or gels or aggregates may be generated considerably

When a radical generator (B-2) or a photocatalyst (B-3) is used as the oxygen absorption accelerator (B), the amount of the oxygen absorption accelerator may be in the range of 0.1 part by weight to 100 parts by weight with respect to 100 parts by weight based on the total sum in weight of the compound (A), the gas barrier resin (C), and the compatibilizer (D). The amount of radical generator (B-2) may be in the range of 0.1 part by weight to 10 parts by weight with respect to 100 parts by weight of organic compound (A).

An antioxidant may be added to the compound (A). The antioxidant to be added is not particularly limited. For example, an antioxidant disclosed in JP 2002-146217 A can be used. For instance, the antioxidant to be used may be 2,5-di-tert-butylhydroquinone, 2,6-di-tert-butyl-p-cresol, 4,4-thiobis-(6-tert-butylphenol), 2,2'-methylene-bis-(4-methyl-6-tert-butylphenol), octadecyl-3-(3',5'-di-tert-butyl-4'-hydroxyphenyl)proplonate, 4,4'-thiobis-(6-tert-butylphenol), 2-tert-butyl-6-(3-tert-butyl-2-hydroxy-5-methylbenzyl)-4-methylphenylacrylate, pentaerythritol tetrakis(3-laurylthiopropionate), 2,6-di-(tert-butyl)-4-methylphenol (BHT), 2,2-methylenebis-(6-tert-butyl-p-cresol), triphenylphosphite, tris(nonylphenyl)phosphite, or dilauryl thiodipropionate.

The amount of the antioxidant to be added is determined with consideration given to, for example, the type and content of each component of the composition, the intended use of the composition, and storage conditions. Generally, the amount of the antioxidant is preferably 0.01 to 1 wt% and more preferably 0.02 to 0.5 wt% with respect to the sum total in weight of the compound (A) and the antioxidant. When the amount of the antioxidant is excessively large, the compound (A) is prevented from reacting with oxygen, and thereby the oxygen absorption function of the resin composition of the present invention may become insufficient. On the other hand, when the amount of antioxidant is excessively small, the reaction with oxygen proceeds during the storage or melt-kneading of the compound (A) and thereby the oxygen absorption function may be deteriorated before the composition of the present invention actually is used.

The oxygen absorption rate of the oxygen absorbing composition of the present invention is preferably 0.01 ml/(g·day) or more and more preferably 0.05 ml/(g·day) or more. In this case, the oxygen absorption rate is the volume of oxygen absorbed by the film per unit time per unit weight when the composition thereof is allowed to stand in a certain volume of air. The specific measurement method is described later in the section of Example.

The oxygen absorbing composition of the present invention may contain a thermoplastic resin (E) other than the compound (A), the gas barrier resin (C), and the compatibilizer (D), as long as the effects of the present invention can be obtained. The thermoplastic resin (E) is not particularly limited and, for example, polyethylene, polypropylene, ethylene-propylene copolymer, copolymer of ethylene and another monomer, or copolymer of propylene and another monomer may be used. Examples of another monomer include alpha-olefins such as 1-butene, isobutene, 4-methyl-1-pentene, 1-hexene, and 1-octene; unsaturated carboxylic acids such as itaconic acid, methacrylic acid, acrylic acid, and maleic anhydride, salts thereof, partial esters thereof, total esters thereof, nitriles thereof, amides thereof, and anhydrides thereof carboxylic acid vinyl esters such as vinyl formate, vinyl acetate, vinyl propionate, vinyl butyrate, vinyl octanoate, vinyl dodecanoate, vinyl stearate, and vinyl arachidonate; vinylsilane compounds such as vinyltrimethoxysilane; unsaturated sulfonic acids and salts thereof; alkylthiols; and vinylpyrrolidones. The thermoplastic resin (E) to be used may be polyolefin such as poly(4-methyl-1-pentene) or poly(1-butene); polyester such as polyethylene terephthalate, polybutylene terephthalate, or polyethylene naphthalate; polystyrene, polycarbonate, or polyacrylate.

The composition of the present invention may contain various additives as long as the effects of the present invention can be obtained. Examples of such additives include an antioxidant, a plasticizer, a heat stabilizer (a melt stabilizer), a photoinitiator, a deodorant, an ultraviolet absorber, an antistatic agent, a lubricant, a colorant, a filler, a desiccant, a bulking agent, a pigment, a dye, a processing aid, a flame retardant, an antifog additive, and other polymer compounds. These additives are disclosed in detail in, for instance, JP 2002-146217 A.

In the oxygen absorbing composition of the present invention, particles formed of the compound (A) may be dispersed in the gas barrier resin (C). The use of a composition containing the particles formed of the compound (A) that are dispersed in a matrix of the gas barrier resin (C) makes it possible to obtain a formed product that has good transparency, gas barrier properties, and oxygen absorption ability. Preferably, the particles formed of the compound (A) have an average particle diameter of 10 µm or smaller. When the average particle diameter exceeds 10 µm, the area of the interface between the compound (A) and another component (such as the gas barrier resin (C)) is reduced, and thereby the oxygen gas barrier properties and the oxygen absorption ability may be deteriorated. The average particle diameter of the particles of the compound (A) is more preferably 5 µm or smaller and further preferably 2 µm or smaller.

The "average particle diameter" was calculated by the following method. First, a sample was cut carefully with a microtome and then platinum was evaporated on the section thus exposed, under reduced pressure. A photograph of the section on which the platinum had been evaporated was taken at 10000-fold magnification using a scanning electron microscope. With respect to the particles observed in the photograph, the maximum diameters of the respective particles were measured and then the average thereof was determined. In this case, the average value is a value obtained by measuring the maximum diameters of at least 20 particles and then averaging them.

The melt flow rate (MFR) (at 210°C under a load of 2160 g according to JIS K7210) of the oxygen absorbing composition according to the present invention is preferably 0.1 to 100 g/10 min, more preferably 0.5 to 50 g/10 min, and further preferably 1 to 30 g/10 min. When the melt flow rate of the resin composition of the present invention deviates from the above-mentioned range, the processability during melt-forming is deteriorated in many cases.

The oxygen absorbing composition of the present invention is produced by mixing the respective components together. The method and order of mixing the respective components are not particularly limited. For example, when a compound (A), an oxygen absorption accelerator (B), a gas barrier resin (C), and a compatibilizer (D) are to be mixed together, they may be mixed together at the same time. Furthermore, after the compound (A) and the oxygen absorption accelerator (B) and the compatibilizer (D) are mixed together, the gas barrier resin (C) may be mixed therewith. Furthermore, after the compound (A) and the compatibilizer (D) are mixed together, the oxygen absorption accelerator (B) and the gas barrier resin(C) may be mixed therewith. Furthermore, after the oxygen absorption accelerator (B) and the gas barrier resin (C) are mixed together, the compound (A) and the compatibilizer (D) may be mixed therewith. Furthermore, after the compound (A) and the gas barrier resin (C) and the compatibilizer (D) are mixed together, the oxygen absorption accelerator (B) may be mixed therewith. Furthermore, after the oxygen absorption accelerator (B) and the compatibilizer (D) are mixed together, the compound (A) and the gas barrier resin (C) may be mixed therewith. Furthermore, a mixture obtained by mixing the compound (A) and the gas barrier resin (C) and the compatibilizer (D) together may be mixed with a mixture obtained by mixing the oxygen absorption accelerator (B) and the gas barrier resin (C) together. In the case where the compatibilizer (D) is not contained, the components other than that also can be mixed in similar orders.

Mixing can be carried out by various methods. From the view points of an easy process and cost, a melt-kneading method is preferable. In this case, a device is used that can achieve a high degree of kneading and thereby the respective components are dispersed finely and uniformly, so that the oxygen absorption performance and the transparency of the composition can be improved and the composition is prevented from containing gels or aggregates.

The device that can achieve a high degree of kneading to be used herein can be a device as described in JP 2002-146217 A. One kneader may be used or two kneaders coupled to each other may be used

Examples of the kneader include continuous kneaders such as a mixing roll and a co-kneader, batch kneaders such as a high speed mixer, a Banbury mixer, an intensive mixer, and a pressure kneader, an apparatus with a rotary disk having a grinding mechanism like a millstone, such as a KCK kneading extruder manufactured by KCK Co., Ltd., a uniaxial extruder provided with a kneading unit (for example, Dulmadge or CTM), as well as simple kneaders such as a ribbon blender and a Brabender mixer. Among these, the continuous kneaders are preferable. Examples of commercially available continuous intensive mixers include FCM manufactured by Farrel Corporation, CIM manufactured by The Japan Steel Works, Ltd., and KCM, LCM, and ACM manufactured by Kobe Steel, Ltd. Preferably, an apparatus is employed that is equipped with a uniaxial extruder under such a kneader and performs kneading and extrusion pelletizing simultaneously. Furthermore, examples of a biaxial kneading extruder with a kneading disk or a kneading rotor include TEX manufactured by The Japan Steel Works, Ltd., ZSK manufactured by Werner & Pfleiderer Corporation, TEM manufactured by Toshiba Machine Co., Ltd., and PCM manufactured by Ikegai Tekko Co., Ltd.

The kneading temperature is generally in the range of 50 to 300°C. In order to prevent oxidation of the compound (A), it is preferable that extrusion is carried out at low temperatures, with the hopper port being sealed with nitrogen. A longer kneading time provides better results. However, from the viewpoints of the prevention of oxidation of the compound (A) and production efficiency, the kneading time is generally 10 to 600 seconds, preferably 15 to 200 seconds, and more preferably 15 to 150 seconds.

### <Articles containing resin composition of the present invention and method of producing the same>

The resin composition of the present invention containing the gas barrier resin (C) can be used in various forms. For example, it can be used as materials for formed products, layers of a multilayer structure, and layers of a multilayer container.

An example of an article containing the resin composition of the present invention is a laminate including a layer formed of the resin composition of the present invention. Another example is a container including a part formed of the resin composition of the present invention.

Another example of the article containing the resin composition of the present invention is one including a multilayer structure, with the multilayer structure including a layer formed of the resin composition of the present invention and a thermoplastic polyester layer.

The resin composition of the present invention is suitable to be used for a container packing, particularly a gasket for a container cap. In this case, the material for the cap body is not particularly limited, and materials to be employed generally (for instance, thermoplastic resin and metal) can be used. A cap equipped with a gasket made of the resin composition of the present invention has excellent gas barrier properties and a continuous oxygen absorption function and therefore is useful for packaging a product that tends to be deteriorated by oxygen.

The resin composition of the present invention can be formed into various formed products, for example, films, sheets, containers, and other packaging materials. The resin composition of the present invention may be pelletized first to be used for forming or may be used for forming directly after dry-blending of the respective components of the resin composition.

The resin composition of the present invention can be formed into, for example, films, sheets, and pipes by melt extrusion molding, into container shapes by injection molding, and into blow molded containers such as bottles by blow molding. A preferred example of blow molding is an extrusion blow molding in which a parison is formed by extrusion molding and then is blown to be molded. Another preferred example of blow molding is injection blow molding in which a preform is formed by injection molding and is blown to be molded.

In the present invention, the formed product obtained by the aforementioned molding may be formed of a single layer but may be laminated with another layer to be used as a multilayer structure in view of providing other properties (for example, mechanical properties, water vapor barrier properties, and further oxygen barrier properties).

The layer structure of the multilayer structure is not particularly limited. Examples of the layer structure include x/y, x/y/x, x/z/y, x/z/y/z/x, x/y/x/y/x, and x/z/y/z/x/z/y/z/x, where x denotes a layer made of a material other than the resin composition of the present invention, y denotes a resin composition layer of the present invention, and z denotes an adhesive resin layer. When a plurality of x layers are provided, they may be of the same type or of different types from each other. A layer further may be formed that is formed using recovered resin made of scraps such as trims that are generated during molding, or recovered resin may be blended in a layer made of another resin. The thickness of each layer of the multilayer structure is not particularly limited. However, the ratio in thickness of the y layer to all the layers is generally in the range of 2 to 20%, from the viewpoint of, for example, the formability and cost.

Paper, a metal layer, or a resin layer can be used for the above-mentioned x layer. The resin to be used for the x layer is not particularly limited and resins described as examples of the thermoplastic resin (E) may be used. Furthermore, polyamides such as poly(ε-caprolactam), polyhexamethylene adipamide, or polymetaxylylene adipamide, or polyvinylidene chloride, polyvinyl chloride, or polyacrylonitrile also may be used. The resin layer may be a non-oriented layer or a uniaxially or biaxially oriented or rolled layer.

Among these resins, polyolefins are preferable in terms of, for example, moisture resistance, mechanical properties, economical efficiency, and heat sealing properties. Polyesters are preferable in terms of, for example, mechanical properties and heat resistance.

On the other hand, the adhesive resin to be used for the z layer is not particularly limited, as long as it can bond respective layers to each other. Examples of the adhesive resin to be used suitably include one-component or two-component polyurethane or polyester curable adhesives, and a carboxylic acid-modified polyolefin resin. The carboxylic acid-modified polyolefin resin is an olefin polymer or copolymer containing unsaturated carboxylic acid or anhydride thereof (for example, maleic anhydride) as a copolymerization component, or a graft copolymer obtained by grafting unsaturated carboxylic acid or anhydride thereof onto an olefin polymer or copolymer.

A preferred example of the adhesive resin is a carboxylic acid-modified polyolefin resin. Particularly, when the x layer is a polyolefin resin, the use of the carboxylic acid-modified polyolefin resin results in good adhesion between the x layer and the y layer. Examples of such a carboxylic acid-modified polyolefin resin include resins obtained through carboxylic acid modification of, for example, polyethylene (low density polyethylene (LDPE), linear low density polyethylene (LLDPE), or very low density polyethylene (VLDPE)), polypropylene, copolymerized polypropylene, ethylene-vinyl acetate copolymer, and ethylene-(meth)acrylic ester (methyl ester or ethyl ester) copolymer.

A formed product including the multilayer structure described above is used for various uses (for instance, a multilayer container). A multilayer structure having a layer with high water vapor barrier properties located on both sides or a higher humidity side of the resin composition layer of the present invention has an oxygen absorption function maintained for a longer period of time and therefore is suitable from the viewpoint of high gas barrier properties that continue for a long period of time. On the other hand, a multilayer container having the resin composition layer of the present invention as the innermost layer is suitable from the viewpoint that the oxygen absorption function inside the container is exhibited quickly.

Furthermore, the selection of a suitable resin allows the resin composition of the present invention to have good transparency. Accordingly, such a composition is suitable for the use as a packaging container whose content is viewed easily. Examples of the gas barrier resin (C) that is preferred to obtain high transparency include polyvinyl alcohol resin, polyamide resin, polyvinyl chloride resin, and polyacrylonitrile resin.

Examples of the multilayer container that can have high transparency include the following two examples. A first container includes a layer made of the resin composition of the present invention and is a multilayer container with a wall thickness (the total thickness of the multilayer structure) of 300 µm or less. In the first container, the thickness of the layer made of the resin composition of the present invention is, for example, in the range of 3 µm to 60 µm. A second container is a multilayer container containing at least one each of a layer made of the resin composition of the present invention and a thermoplastic polyester (PES) layer. These containers are described below.

The first container is a flexible container composed of a multilayer structure with a relatively small total thickness and generally is processed in the form of, for example, a pouch. This container has excellent gas barrier properties, further has a continuous oxygen absorption function, and is easy to produce. Accordingly, it is very useful for packaging of a product that is highly sensitive to oxygen and thereby tends to be deteriorated.

Since the wall thickness (the thickness of the multilayer structure) of the first container is as thin as 300 µm or less, even if the transparency is deteriorated with time, the degree of the deterioration is small. From the viewpoint of maintaining the transparency and flexibility, the thickness of the multilayer structure is preferably 250 µm or less and more preferably 200 µm or less. On the other hand, when consideration is given to mechanical properties of the container, the thickness of the multilayer structure is preferably 10 µm or more, more preferably 20 µm or more, and further preferably 30 µm or more.

When the above-mentioned multilayer container is formed by a dry lamination method, for example, a non-oriented film, a uniaxially oriented film, a biaxially oriented film, or a rolled film can be used for the thermoplastic resin layer. Among them, a biaxially oriented polypropylene film, a biaxially oriented polyethylene terephthalate film, and a biaxially oriented poly(e- caprolactam) film are preferable from the viewpoint of mechanical strength. The biaxially oriented polypropylene film is preferable from the viewpoint of humidity resistance.

When a bag-shaped multilayer container is to be produced, in order to seal the multilayer container, a layer made of a heat sealable resin may be formed on at least one outermost layer surface in the process of producing the multilayer film. Examples of such a resin include polyolefins such as polyethylene and polypropylene. The multilayer film is processed into a bag shape, so that a packaging container to be filled with contents is obtained.

The second container described above is excellent in gas barrier properties and oxygen absorption function and is provided with good transparency through the selection of a suitable resin. It therefore is used in various forms such as a bag-shaped container, a cup-shaped container, or a blow molded container. Among these, the blow molded container, particularly a bottle, is important. The second container is useful as a container for a content that tends to be deteriorated by oxygen gas, for example, a foodstuff or a medical product, and is very useful as a container for a beverage such as beer.

For the PES (thermoplastic polyester) that is used for the container of the present invention, such as the second container, condensation polymers containing aromatic dicarboxylic acids or alkyl esters thereof and diols as main components thereof are used. Especially, PES containing ethylene terephthalate as the main component thereof is preferable. Specifically, the total ratio (mol %) of terephthalic acid units and ethylene glycol units to all the constitutional units of the PES is preferably 70 mol% or more and more preferably 90 mol% or more. When the above-mentioned ratio is 70 mol% or more, the container can be prevented from undergoing a deterioration in mechanical strength, an increase in thermal shrinkage and a decrease in productivity As long as the effects of the present invention can be obtained, the aforementioned PES may contain a bifunctional compound unit other than terephthalic acid unit and ethylene glycol unit, for example, neopentyl glycol unit, cyclohexanedimethanol unit, cyclohexanedicarboxylic acid unit, isophthalic acid unit, or naphthalenedicarboxylic acid unit. The method of producing the PES as described above is not limited and, for example, a known method can be used.

### <Method of producing multilayer container>

The method for obtaining a multilayer structure (a multilayer container) is not limited. For example, extrusion lamination, dry lamination, coinjection molding, and coextrusion molding may be used. Examples of the coextrusion molding include coextrusion lamination, coextrusion sheet molding, coextrusion inflation molding, and coextrusion blow molding.

For example, sheet, film, or parison of the multilayer structure thus obtained further may be reheated at a temperature that is equal to or lower than the melting point of the resin contained therein, and then may be stretched uniaxially or biaxially by, for example, thermoforming such as draw forming, roll-drawing, pantograph drawing, inflation drawing, or blow molding, so that a formed product thus stretched may be obtained.

An example of the method of producing the first container described above is a method of laminating a resin composition layer of the present invention and another thermoplastic resin layer by a method such as dry lamination or coextrusion lamination.

An example of the method of producing the second container described above is coinjection blow molding. The coinjection blow molding is suitable from the viewpoint of, for instance, productivity. In the coinjection blow molding, a container precursor (parison) obtained by coinjection molding is subjected to stretch blow molding and thereby a container is produced.

In the coinjection molding, molding is carried out as follows. That is, generally, resins that form respective layers of the multilayer structure are introduced into concentric nozzles from at least two injection cylinders and are injected into a single mold at the same time or alternately at different timings, which is followed by one mold clamping operation. The coinjection molding may be carried out by a known method, specifically a method described in JP 2002-146217 A.

For example, a parison may be produced by a method (1) in which PES layers for an inner layer and an outer layer are injected first and then a resin composition of the present invention to serve as an intermediate layer is injected, so that a molded container with a three layer structure of PES/resin composition/PES is obtained, or a method (2) in which PES layers for an inner layer and an outer layer are injected first, then a resin composition of the present invention is injected, and at the same time or after that, a PES layer is injected again, so that a molded container with a five layer structure of PES/resin composition/PES/resin composition/PES is obtained. Furthermore, an adhesive resin layer may be disposed between a resin composition layer and a PES layer.

The injection temperature of PES is generally in the range of 250 to 330°C, for example, in the range of 270 to 320°C, and for example, in the range of 280 to 310°C.

The injection temperature of the resin composition of the present invention is, for example, in the range of 170 to 250°C, for example, in the range of 180 to 240°C, for example, in the range of 190 to 230°C. In order to prevent the progress of oxidation of the resin composition during melting, a raw material supply hopper may be sealed with nitrogen.

Raw materials may be supplied to a molding machine in the form of pellets obtained by melt-blending respective components, or the respective components are dry-blended, which then may be supplied to a molding machine.

The parison thus obtained has, for example, a thickness of 2 to 5 mm as a whole, and the total thickness of the resin composition layer of the present invention is 10 to 500 µm.

The parison described above is transferred to a stretch blowing stage, in a high temperature state or after it is reheated with, for example, a block heater or an infrared heater. In the stretch blowing stage, a heated parison is stretched one to five fold in the longitudinal direction, and thereafter was blown one to four fold with, for example, compressed air by stretch blow molding, so that the multilayer container of the present invention can be produced. The temperature of the parison is generally in the range of 75 to 150°C, for example, 85 to 140°C, 90 to 130°C, or 95 to 120°C.

The thickness of the body part of the second multilayer container thus obtained is generally 100 to 2000 µm and preferably 150 to 1000 µm, and can be varied according to the intended use thereof. In this case, the total thickness of the resin composition layer of the present invention is preferably in the range of 2 to 200 µm and more preferably 5 to 100 µm.

### EXAMPLES

Hereinafter, examples of the present invention are described, but the present invention is not limited to the following examples. In the following examples, analysis and evaluation were performed as follows.

### (1) Molecular structure of compound (A)

The molecular structure of the compound (A) produced by the method described below was estimated from the spectrum obtained through ¹H-NMR measurement carried out using chloroform-D as a solvent (using "JNM-GX-500" manufactured by JEOL Ltd.).

### [Cyclic ether (1)]

In a 1000-ml three-neck flask equipped with a reflux condenser, a Dean-Stark trap, a thermometer, and a mechanical stirrer, 136.14 g (1 mol) of pentaerythritol, 300 g of toluene, and 120 g (1.2 mol) of 3-formyltetrahydrofuran were placed, and then the inside of the system was subjected to nitrogen substitution. Then 1.72 g (10 mmol) of p-toluenesulfonic acid was added thereto. This was stirred at 120°C for three hours and thereby distillation of a predetermined amount of water was observed. The reaction solution was cooled to room temperature, and 100 g of 5% ammonia aqueous solution was added to the reaction solution. This was stirred and then the lower layer was removed. Subsequently, 100 g of water was added thereto, which was then stirred. Thereafter, the lower layer was removed. After this operation was carried out twice, the organic layer was washed with water. The resultant organic layer was removed and thereby 171.0 g (3-formyltetrahydrofuran-based yield: 95%) of product (cyclic ether (1)) was obtained. The molecular structure of the cyclic ether (1) thus obtained was analyzed. As a result, it was proved to be the compound indicated by Formula (14) shown in FIG. 5.

### [Cyclic ether (2)]

The same synthesis as in the synthetic example 1 was carried out except that 2-formyltetrahydrofuran was used instead of 3-formyltetrahydrofuran, and thereby 165.6 g (2-formyltetrahydrofuran-based yield: 92%) of a product (cyclic ether (2)) was obtained. The molecular structure of the cyclic ether (2) thus obtained was analyzed. As a result, it was proved to be the compound indicated by Formula (15) shown in FIG. 5.

### [Cyclic ether (3)]

The same synthesis as in the synthetic example 1 was carried out except that 136.8 g (1.2 mol) of 4-formyltetrahydropyran was used instead of 120 g (1.2 mol) of 3-formyltetrahydrofuran, and thereby 179.1 g (4-formyltetrahydropyran-based yield: 91%) of a product (cyclic ether (3)) was obtained. The molecular structure of the cyclic ether (3) thus obtained was analyzed. As a result, it was proved to be the compound indicated by Formula (16) shown in FIG. 5.

### [Cyclic ether (4)]

The same synthesis as in the synthetic example 1 was carried out except that 136.8 g (1.2 mol) of 2-formyltetrahydropyran was used instead of 120 g (1.2 mol) of 3-formyltetrahydrofuran, and thereby 181.1 g (2-formyltetrahydropyran-based yield: 92%) of a product (cyclic ether (4)) was obtained. The molecular structure of the cyclic ether (4) thus obtained was analyzed. As a result, it was proved to be the compound indicated by Formula (18) shown in FIG. 5.

### [Cyclic ether (5)]

The same synthesis as in the synthetic example 1 was carried out except that 122 g (1 mol) of 1,2,3,4-butanetetraol was used instead of 136.14 g (1 mol) of pentaerythritol of Sample 1 described above, and thereby 159.6 g (1,2,3,4-butanetetraol-based yield: 93%) of a product (cyclic ether (5)) was obtained. The molecular structure of the cyclic ether (5) thus obtained was analyzed. As a result, it was proved to be the compound indicated by Formula (9) shown in FIG. 4.

### [Compound of Comparative Sample 1]

The compound of Comparative Sample 1 used herein was polyester-polyether block copolymer A-1 described in the section of Example of JP 2003-113311 A. This copolymer A-1 is a copolymer including polybutylene terephthalate as the hard segment and polytetramethylene glycol with a number average molecular weight of 1000 as the soft segment. In this copolymer A-1, the content of polytetramethylene glycol is 60 wt%.

### [Compound of Comparative Sample 2]

Poly(tetrahydrofurfuryl methacrylate) described in Example 1 of USP 6,746,622 was used.

In the following examples and comparative examples, EVOH with the following composition and physical properties was used:
Ratio of ethylene units to all constitutional units: 32 mol%,
Saponification degree: 99.6%,
MFR (at 210°C under a load of 2160 g): 3.1 g/10 min,
Content of phosphate compound (in terms of phosphoric ion): 100 ppm, Content of sodium salt (in terms of sodium): 65 ppm,
Melting point: 183°C, and
Oxygen transmission rate (at 20°C and 65% RH): 0.4 ml·20 µm/(m²·day· atm).

### [Production of Sample 1]

40 g of cyclic ether (1) described above and 0.34 g of cobalt stearate (the amount of Co was about 800 ppm in terms of Co metal weight with respect to cyclic ether weight) were dry-blended, which was then blended at 150°C for five minutes while the atmosphere was purged with nitrogen gas. A solid thus obtained was ground with a mixer and thereby powder (Sample

### 1) was obtained that passed through a mesh with a size of 60 to 80 mesh. [Production of Samples 2 to 6]

4 g of one of cyclic ethers (1) to (5) described above, 0.34 g of cobalt stearate (the amount of Co was about 800 ppm in terms of Co metal weight with respect to the total weight of cyclic ether and EVOH), and 36 g of EVOH were dry-blended, which was then melt-blended at 200°C for five minutes while the atmosphere was purged with nitrogen gas. Subsequently, five types of compositions thus obtained each were heated to 200°C and were then pressed. Thus films with a thickness of about 200 µm were obtained. Thus, a film (Sample 2) containing cyclic ether (1), a film (Sample 3) containing cyclic ether (2), a film (Sample 4) containing cyclic ether (3), a film (Sample 5) containing cyclic ether (4), and a film (Sample 6) containing cyclic ether (5) were produced.

The sections of those films were observed with a scanning electron microscope and thereby cyclic ether dispersed in the form of particles was observed in each film. The average particle diameter of the particles of each cyclic ether was 0.5 µm or smaller.

### [Production of Sample 7]

A film (with a thickness of about 200 µm) of Sample 7 was produced by the same method as that used for Sample 2 except that 36 g of polycaproamide (Nylon-6, manufactured by Ube Industries, Ltd., trade name: 1030B) was used instead of 36 g of EVOH. The section of this film was observed with the scanning electron microscope and thereby cyclic ether (1) dispersed in the form of particles was observed with good dispersibility. The average particle diameter of the particles of cyclic ether (1) was 1 µm or smaller.

### [Production of Sample 8]

A film (with a thickness of about 200 µm) of Sample 8 was produced by the same method as that used for Sample 2 except that 36 g of polyacrylonitrile (manufactured by Mitsui Chemicals, Inc., trade name: Barex 1000) was used instead of 36 g of EVOH.

### [Production of Sample 9]

A film (with a thickness of about 200 µm) of Sample 9 was produced by the same method as that used for Sample 2 except that 36 g of polyvinyl chloride (manufactured by Sekisui Chemical Co., Ltd., trade name:
ESMEDICA V6142E) was used instead of 36 g of EVOH.

### [Production of Sample 10]

A film of Sample 10 was produced by the same method as that used for Sample 2 except that 0.4 g of titanium dioxide powder (manufactured by Nippon Aerosil Co., Ltd., trade name: P-25 (containing 73.5% of anatase type and 26.5% of rutile type)) was used instead of cobalt stearate. Specifically, first, 4 g of cyclic ether (1), 0.40 g of titanium dioxide, and 36 g of EVOH were dry-blended, which was then melt-blended at 200°C for five minutes while the atmosphere was purged with nitrogen gas. Subsequently, the composition thus obtained was heated to 200°C and was then pressed. Thus a film (Sample 10) with a thickness of about 200 µm was obtained. The section of this film was observed with the scanning electron microscope and thereby cyclic ether (1) dispersed in the form of particles was observed with good dispersibility The average particle diameter of the particles of cyclic ether (1) was 0.5 µm or smaller.

### [Production of Sample 11]

In a beaker, 40.5 g of water/methanol (= 30/70 wt%) mixed solution and 4.5 g of EVOH were placed and were then heated to 80°C while being stirred well. Thus an EVOH solution with a concentration of 10 wt% was prepared. Then 0.5 g of cyclic ether (1) and 0.05 g of N-hydroxyphthalimide (NHPI) were added to the solution and were dissolved uniformly at room temperature under a nitrogen gas atmosphere. The solution thus obtained was applied onto a commercial PET film that had been corona-treated, by bar coating. Thereafter, the solvent was removed using a vacuum dryer. Thus, a film (Sample 11) was obtained, with a coating film with a thickness of about 10 µm being formed thereon. The section of the coating film part of the film was observed with the scanning electron microscope and thereby cyclic ether (1) dispersed in the form of particles was observed with good dispersibility. The average particle diameter of the particles of cyclic ether (1) was 0.5 µm or smaller.

### [Production of Sample 12]

A film of Sample 12 was produced by the same method as that used for Sample 11 except that cobalt acetate was used instead of N-hydroxyphthalimide. Specifically, 40.5 g of water/methanol (= 30/70 wt%) mixed solution and 4.5 g of EVOH were placed in a beaker and were then heated to 80°C while being stirred well. Thus an EVOH solution with a concentration of 10 wt% was prepared. Then 0.5 g of cyclic ether (1) and a commercial cobalt acetate solution were added to the solution and were dissolved uniformly at room temperature under a nitrogen gas atmosphere. The cobalt acetate solution was added in such a manner that the amount of Co was 400 ppm with respect to the total amount of cyclic ether and EVOH. Subsequently, the solution thus obtained was applied onto a commercial PET film that had been corona-treated, by bar coating. Thereafter, the solvent was removed using the vacuum dryer. Thus, a film (Sample 12) was obtained, with a coating film with a thickness of about 10 µm being formed thereon. The section of the coating film part of the film was observed with the scanning electron microscope and thereby cyclic ether (1) dispersed in the form of particles was observed with good dispersibility. The average particle diameter of the particles of cyclic ether (1) was 0.5 µm or smaller.

### [Production of Sample 13]

A film (with a thickness of about 200 µm) of Sample 13 was produced by the same method as that used for Sample 2 except that 36 g of low density polyethylene (manufactured by Mitsui Sumitomo Polyolefin Company, Limited, trade name: F9725) was used instead of 36 g of EVOH. In this case, poor compatibility between polyethylene and cyclic ether resulted in the generation of a partially unmelted part. Furthermore, gels were generated in producing the film.

### [Comparative Sample 1]

A film (with a thickness of about 200 µm) of Comparative Sample 1 was produced by the same method as that used for Sample 2 except that 4 g of polyester-polyether block copolymer was used instead of 4 g of cyclic ether (1). The section of this film was observed with the scanning electron microscope and thereby the polyester-polyether block copolymer dispersed in the form of particles was observed. However, the average particle diameter of the particles of polyester-polyether block copolymer was around 1 µm, and the dispersibility thereof was lower as compared to the samples in which cyclic ether was used.

### [Comparative Sample 2]

A film (with a thickness of about 200 µm) of Comparative Sample 2 was produced by the same method as that used for Sample 2 except that 4 g of poly(tetrahydrofurfuryl methacrylate) was used instead of 4 g of cyclic ether (1). Poor thermal stability of the poly(tetrahydrofurfuryl methacrylate) caused the film of Comparative Sample 3 to deteriorate during melt-molding and to be discolored to brown.

### [Evaluations of oxygen absorption abilities of Samples 1 to 6 and Comparative Samples 1 and 2]

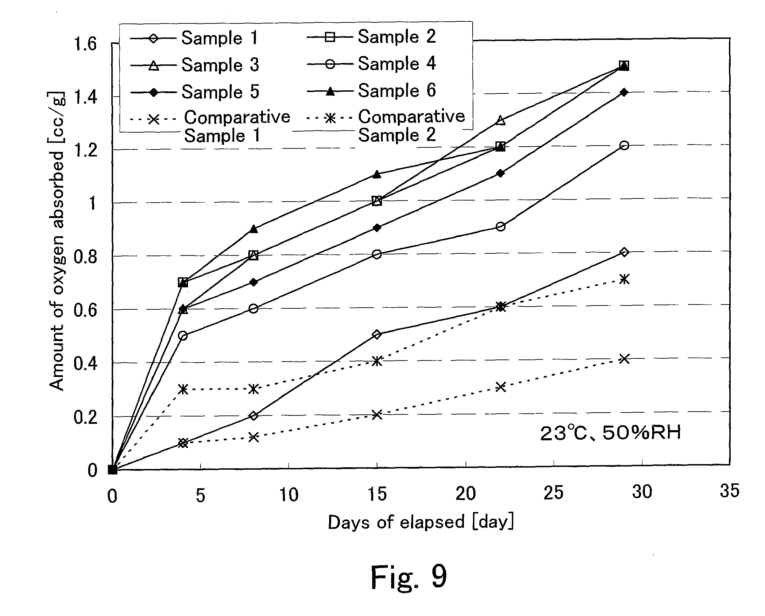

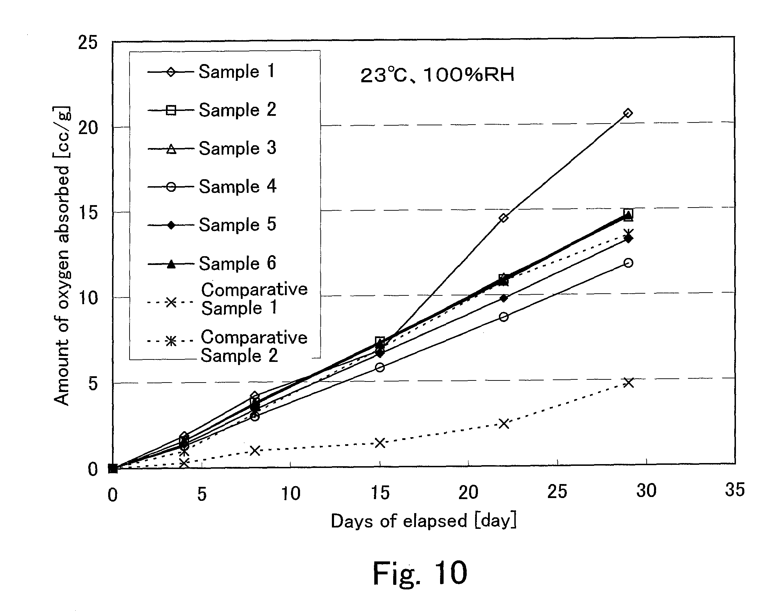

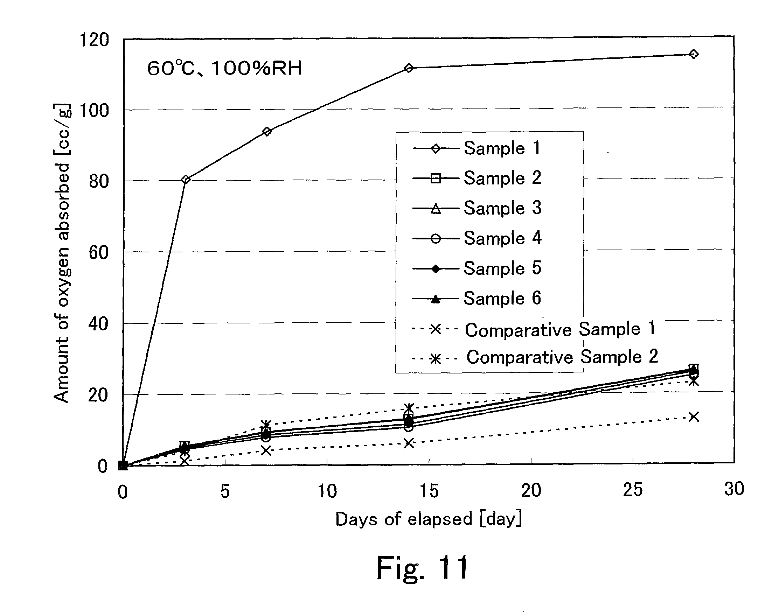

The powder of Sample 1, the films of Samples 2 to 6, and the films of Comparative Samples 1 and 2 were prepared. Thereafter, 0.3 g of each sample was placed in a bottle with a volume of 260 cc in a room at 23°C and 50% RH and then the bottle was sealed (Condition 1). Furthermore, 0.3 g of each sample was placed together with 5 cc of water in a bottle with a volume of 260 cc in a room at 23°C and 50% RH and then the bottle was sealed (Condition 2). Moreover, 0.3 g of each sample was placed together with 5 cc of water in a bottle with a volume of 260 cc in a room at 23°C and 50% RH and then the bottle was sealed (Condition 3). Thereafter, the bottles under Condition 1 and Condition 2 were kept at 23°C and the bottle under Condition 3 was kept at 60°C. This allowed the insides of the bottles to have 23°C and 50% RH (Condition 1), 23°C and 100% (Condition 2), and 60°C and 100% RH (Condition 3). Then the oxygen concentration inside each bottle was measured periodically and the amount of oxygen absorbed was calculated. FIG. 9 shows the measurement results under Condition 1, FIG. 10 shows the measurement results under Condition 2, and FIG. 11 shows the measurement results under Condition 3. As shown in FIGs. 9 to 11, all the samples exhibited oxygen absorption abilities.

### [Evaluations of oxygen absorption abilities of Samples 7 to 13]

The oxygen absorption abilities of the films of Samples 7 to 13 were evaluated by the same method as described above. As a result, all the samples exhibited oxygen absorption.

### [Odor evaluation of Samples 1 to 6 and 13 as well as Comparative Samples 1 and 2]

The powder of Sample 1, the films of Samples 2 to 6, and the films of Comparative Samples 1 to 3 were prepared. Thereafter, 1 g of each sample was placed in a bottle with an inner volume of 85 ml that had been filled with air at 23°C and 50% RH. Then 1 ml of water was added to each bottle and the mouth of the bottle was sealed using epoxy resin and a multilayer sheet containing an aluminum layer. Each bottle was allowed to stand at 60°C for two weeks. After that, five panelists evaluated the headspace gases of the samples.

As a result, a burnt smell was perceived with respect to Comparative Samples 1 and 2. With respect to Samples 1 and 13, a smell was perceived slightly but was not as strong as that perceived with respect to Comparative Samples 1 and 2. With respect to Samples 2 to 6, no peculiar odor was perceived.

Materials used for producing the respective samples are indicated in Table 1.

**[Table 1]**

| | Compound (A) | Oxygen absorption accelerator (B) | Resin |
|---|---|---|---|
| Sample 1 | Cyclic ether (1) | Cobalt stearate | None |
| Sample 2 | Cyclic ether (1) | Cobalt stearate | EVOH |
| Sample 3 | Cyclic ether (2) | Cobalt stearate | EVOH |
| Sample 4 | Cyclic ether (3) | Cobalt stearate | EVOH |
| Sample 5 | Cyclic ether (4) | Cobalt stearate | EVOH |
| Sample 6 | Cyclic ether (5) | Cobalt stearate | EVOH |
| Sample 7 | Cyclic ether (1) | Cobalt stearate | Nylon-6 |
| Sample 8 | Cyclic ether (1) | Cobalt stearate | Polyacrylonitrile |
| Sample 9 | Cyclic ether (1) | Cobalt stearate | Polyvinyl chloride |
| Sample 10 | Cyclic ether (1) | Titanium dioxide | EVOH |
| Sample 11 | Cyclic ether (1) | NHPI | EVOH |
| Sample 12 | Cyclic ether (1) | Cobalt acetate | EVOH |
| Sample 13 | Cyclic ether (1) | Cobalt stearate | LDPE |
| Comparative Sample 1 | Polyester-polyether block copolymer | Cobalt stearate | EVOH |
| Comparative Sample 2 | Poly(tetrahydrofurfuryl methacrylate) | Cobalt stearate | EVOH |

The evaluation results of the respective samples are indicated in Table 2.

**[Table 2]**

| | Oxygen absorption ability | Odor | Dispersibility (Average particle diameter) | State during production |
|---|---|---|---|---|
| Sample 1 | Yes | Slightly perceived | - | - |
| Sample 2 | Yes | Not perceived | 0.5 µm or smaller | - |
| Sample 3 | Yes | Not perceived | 0.5 µm or smaller | - |
| Sample 4 | Yes | Not perceived | 0.5 µm or smaller | - |
| Sample 5 | Yes | Not perceived | 0.5 µm or smaller | - |
| Sample 6 | Yes | Not perceived | 0.5 µm or smaller | - |
| Sample 7 | Yes | - | 1 µm or smaller | - |
| Sample 8 | Yes | - | - | - |
| Sample 9 | Yes | - | - | - |
| Sample 10 | Yes | - | 0.5 µm or smaller | - |
| Sample 11 | Yes | - | 0.5 µm or smaller | - |
| Sample 12 | Yes | - | 0.5 µm or smaller | - |
| Sample 13 | Yes | Slightly perceived | - | Including unmelted part |
| Comparative Sample 1 | Yes | Burnt smell | Around 1µm | - |
| Comparative Sample 2 | Yes | Burnt smell | - | Discolored |

As described above, the present invention made it possible to obtain an oxygen absorbing composition that did not generate an unpleasant odor during oxygen absorption and an oxygen absorbing composition in which a compound that exhibited an oxygen absorption ability was dispersed in a resin with good dispersibility.

### Industrial Applicability

The present invention is applicable to oxygen absorbing compositions and articles produced using the same. The present invention is applicable to packaging materials, for example, pouches, bottles, and gaskets of bottle caps.

## Claims

1. An oxygen absorbing composition, comprising a compound with a molecular weight of less than 10000 and an oxygen absorption accelerator,
wherein the compound contains two or more ring structures that are at least one type, each of which has an ether bond.

2. The oxygen absorbing composition according to claim 1, wherein the ring structures each are composed of an oxygen atom and a saturated hydrocarbon chain bonded to the oxygen atom.

3. The oxygen absorbing composition according to claim 1, wherein at least one type of the ring structures comprises a nitrogen atom.

4. The oxygen absorbing composition according to claim 1, wherein the ring structures each is one of four- to seven-membered rings.

5. The oxygen absorbing composition according to claim 1, wherein at least one type of substituent with a carbon number of 1 to 11 is bonded to at least one type of the ring structures.

6. The oxygen absorbing composition according to claim 1, wherein the compound has a molecular weight of 200 to 3000.

7. The oxygen absorbing composition according to claim 1, wherein the compound comprises at least one structure selected from an acetal structure and a ketal structure.

8. The oxygen absorbing composition according to claim 1, wherein an oxygen atom and a carbon atom that are contained in the compound satisfy 0.05 < [the number of oxygen atoms] / [the number of carbon atoms] < 1.0.

9. The oxygen absorbing composition according to claim 1, wherein the compound comprises four or more of the ring structures.

10. The oxygen absorbing composition according to claim 1, wherein the oxygen absorption accelerator is at least one selected from a transition metal salt, a radical generator, and a photocatalyst.

11. The oxygen absorbing composition according to claim 1, wherein the oxygen absorption accelerator is at least one transition metal salt selected from the group consisting of iron salt, nickel salt, copper salt, manganese salt, and cobalt salt.

12. The oxygen absorbing composition according to claim 1, further comprising a gas barrier resin.

13. The oxygen absorbing composition according to claim 12, wherein the gas barrier resin has an oxygen transmission rate at 20°C and 65% RH of 500 ml·20 µm/(m²·day·atm) or lower.

14. The oxygen absorbing composition according to claim 12, wherein the gas barrier resin is at least one resin selected from the group consisting of polyvinyl alcohol resin, polyamide resin, polyvinyl chloride resin, and polyacrylonitrile resin.

15. The oxygen absorbing composition according to claim 12, wherein the gas barrier resin is an ethylene-vinyl alcohol copolymer with a ratio of ethylene units to all constitutional units of 5 to 60 mol% and a saponification degree of 90% or more.

16. The oxygen absorbing composition according to claim 12, wherein the compound and the gas barrier resin are contained in such a manner that a value of [weight of the compound] / ([weight of the compound] + [weight of the gas barrier resin]) is in a range of 0.001 to 0.3.

17. The oxygen absorbing composition according to claim 12, wherein particles formed of the compound are dispersed in the gas barrier resin.

18. A laminate comprising a layer formed of an oxygen absorbing composition according to claim 12.

19. A container comprising a portion formed of an oxygen absorbing composition according to claim 12.

20. The container according to claim 19, comprising a multilayer structure,
wherein the multilayer structure includes a layer formed of the oxygen absorbing composition and a thermoplastic polyester layer.
